(19) Europäisches Patentamt
European Patent Office
Office européen des brevets

(11) EP 0 413 560 B1

(12) EUROPEAN PATENT SPECIFICATION

(45) Date of publication and mention of the grant of the patent:
**29.01.1997 Bulletin 1997/05**

(51) Int Cl.[6]: **C08L 67/02**, C08G 63/672, C08L 51/04

(21) Application number: **90308936.5**

(22) Date of filing: **14.08.1990**

(54) **Novel polyester molding compositions having unexpected reduced water absorption properties**

Polyester-Formmassen mit unerwartet niedriger Wasserabsorption

Compositions à mouler de polyester ayant une absorption d'eau réduite imprévue

(84) Designated Contracting States:
**AT BE CH DE DK ES FR GB GR IT LI LU NL SE**

(30) Priority: **18.08.1989 US 395845**

(43) Date of publication of application:
**20.02.1991 Bulletin 1991/08**

(73) Proprietor: **HOECHST CELANESE CORPORATION**
**Somerville, N.J. 08876 (US)**

(72) Inventor: **Golder, Michael D.**
**Allendale, New Jersey (US)**

(74) Representative:
**De Minvielle-Devaux, Ian Benedict Peter et al**
**CARPMAELS & RANSFORD**
**43, Bloomsbury Square**
**London WC1A 2RA (GB)**

(56) References cited:
**EP-A- 0 127 981**
**EP-A- 0 142 336**
**EP-A- 0 237 306**
**FR-A- 2 287 326**
**US-A- 3 907 926**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 413 560 B1

## Description

### FIELD OF INVENTION

This invention relates generally to polyester molding compositions. More particularly, the present invention relates to polyester molding compositions which unexpectantly exhibit less water absorption properties (and thus less swelling). In preferred embodiments, the invention includes a blend of a polyester base resin with a copolyester elastomer having long chain ester units derived from the reaction of a dicarboxylic acid and a long chain poly(alkylene oxide) glycol having a carbon to oxygen ratio of between 2.0 to 2.4.

### BACKGROUND AND SUMMARY OF THE INVENTION

Blends of linear polyester resins (e.g., poly(alkylene) terephthalates, such as poly(ethylene) terephthalate, poly (butylene) terephthalate, and the like and segmented copolyester elastomers are well known engineering resins that are typically employed in many end use applications, such as decorative and/or functional automotive parts.

For example, U.S. Patent Nos. 3,907,926 and 4,469,851 each disclose blends of poly(butylene) terephthalate with a segmented copolyester elastomer. It is known, however, that segmented copolyester elastomers which include long chain ester units derived from corresponding long chain glycols having a carbon to oxygen ratio of less than 2.5 (hereinafter simply referred to as "low C/O copolyester elastomers") disadvantageously absorb water to an extent whereby deleterious swelling occurs. In this regard, please refer to U.S. Patent No. 3,651,014 at column 4, lines 32-36. For this reason (i.e. due to the undesirable swelling characteristics), low C/O copolyester elastomers are usually not employed to form movable parts whereby spatial clearance during movement may be critical. That is, swelling of such parts could cause them to be "frozen" and thus render the component in which the part is employed inoperative.

According to the present invention, however, it has been discovered that blends of a polyester base resin (to be described below) with a low C/O copolyester elastomer exhibit significantly less water absorption properties than would have been expected using the law of mixtures rule. Thus, the novel polyester blends of this invention can be employed in many end-use applications and environments typically considered inappropriate for resins containing low C/O copolyester elastomers due to their desirably low water absorption properties.

The present invention now provides a polyester resin composition which comprises (1) a polyester base resin that is a first copolyester elastomer consisting essentially of a multiplicity of recurring intralinear long chain and short chain ester units connected head-to-tail through ester linkages, wherein said long chain ester units are represented by the structural formula:

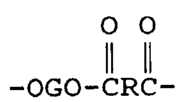

(a1)

and the short chain ester linkages are represented by the structural formula:

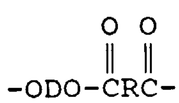

(b)

wherein:

G is a divalent radical remaining after removal of terminal hydroxy groups from a poly(alkylene oxide) glycol having a molecular weight of 600 to 6000 and a carbon to oxygen ratio greater than 2.5;
D is a divalent radical remaining after removal of hydroxyl groups from a low molecular weight diol having a molecular weight of less than 250; and
R is a divalent radical remaining after removal of carboxyl groups from a dicarboxylic acid having a molecular weight of less than 300;

and (2) a second copolyester elastomer consisting essentially of a multiplicity of recurring intralinear long chain and short chain ester units connected head-to-tail through ester linkages, wherein said long chain ester units are represented by the structural formula:

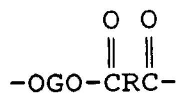 (a2)

and the short chain ester linkages are represented by the structural formula:

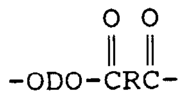 (b)

wherein:

G is a divalent radical remaining after removal of terminal hydroxy groups from a poly(alkylene oxide) glycol having a molecular weight of 400-3500 and a carbon to oxygen ratio of 2.0 to 2.4;
D is a divalent radical remaining after removal of hydroxyl groups from a low molecular weight diol having a molecular weight of less than 250; and
R is a divalent radical remaining after removal of carboxyl groups from a dicarboxylic acid having a molecular weight of less than 300.

Further aspects and advantages will become apparent from the following detailed discussion of the preferred exemplary embodiments.

## DETAILED DESCRIPTION OF THE PREFERRED EXEMPLARY EMBODIMENTS

### A. The Low C/O Copolyester Elastomer Component

The polyester blends of this invention necessarily include a segmented copolyester elastomer which includes units derived from corresponding long chain poly(alkylene oxide) glycols having a carbon to oxygen ratio of-between 2.0 to 2.4 (which, as indicated previously, are referred to herein as "low C/O copolyester elastomers"). The low C/O copolyester elastomers are, in and of themselves, known from U.S. Patent No. 3,784,520.

In essence, the low C/O copolyester elastomers used in the polyblends within the scope of this invention consist essentially of a multiplicity of recurring intralinear long chain and short chain ester units connected head-to-tail through ester linkages, whereby the long chain ester units are represented by the structural formula:

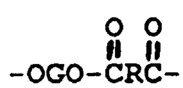 (a)

and the short chain ester linkages are represented by the structural formula:

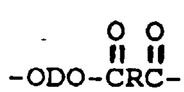 (b)

wherein G is a divalent radical remaining after removal of terminal hydroxy groups from a poly(alkylene oxide) glycol having a molecular weight of 400-3500 and a carbon to oxygen ratio of 2.0 to 2.4; D is a divalent radical remaining after removal of hydroxyl groups from a low molecular weight diol having a molecular weight of less than 250; and R is a divalent radical remaining after removal of carboxyl groups from a dicarboxylic acid having a molecular weight of less than 300.

The short chain ester units will constitute 25-65% by weight of the copolyester, and at least 70% of the R groups must be 1,4-phenylene radicals. Moreover, at least about 70% of the D groups must be 1,4-butylene radicals and the sum of the percentages of the R groups which are not 1,4-phenylene radicals and of the D groups which are not

1,4-butylene radicals cannot exceed about 30%.

The term "long chain ester units" as applied to units in the copolyester chain refers to the reaction product of a long chain glycol with a dicarboxylic acid. Such "long chain ester units", which are a repeating unit in the copolyester correspond to the formula (a) above. The long chain glycols are poly(alkylene oxide) glycols which contain a major proportion of ethylene oxide units, such that the maximum carbon to oxygen ratio is 2.0 to 2.4. Preferably, the long chain glycols will be entirely poly(ethylene oxide) glycol.

It may be desirable to use random or block copolymers of ethylene oxide containing minor proportions of a second alkylene oxide. Typically the second monomer will constitute less than 40 mole percent of the poly(alkylene oxide) glycols and more preferably, less than 20 mole percent. Representative examples of the second monomer include 1,2- and 1,3-propylene oxides, 1,2-butylene oxide and tetrahydrofuran. It shoud be noted that regardless of the second monomer utilized in the poly(alkylene oxide) glycol, the carbon to oxygen ration must be no more than about 2.4. It is also possible to use mixtures of poly(ethylene oxide) glycol and a second poly(alkylene oxide) glycol, such as poly (1,2-propylene oxide) glycol or poly(tetramethylene oxide) glycol as long as the requirement that the carbon to oxygen ratio is no more than 2.4 is met. The carbon to oxygen ratio of 2.0 to 2.4 is meant to include lower molecular weight poly(alkylene oxide) glycols, such as poly(ethylene oxide) glycol of 400 molecular weight in which the carbon to oxygen ratio is 1.8, since the 2.0 to 2.4 ratio does not take into account the elements of water, which are present in the glycol in addition to the alkylene oxide units, but are split out and are not part of the polymer.

The term "short chain ester units" as applied to units in the polymer chain refers to low molecular weight compounds or polymer chain units having molecular weights less than about 550. They are made by reacting a low molecular weight diol (below about 250) with a dicarboxylic acid to form a repeating unit corresponding to the Formula (b) above. Representative low molecular weight diols (other than 1,4-butanediol) which react to form short chain ester units are acyclic, alicyclic and aromatic dihydroxy compounds. Preferred are diols with 2-15 carbon atoms, such as ethylene, propylene, isobutylene, tetramethylene, pentamethylene, 2,2-dimethyltrimethylene, hexamethylene and decamethylene glycols, dihydroxy cyclohexane, cyclohexane dimethanol, resorcinol, hydroquinone, 1,5-dihydroxy naphthalene, etcetera. Especially preferred are aliphatic diols containing 2-8 carbon atoms. included among the bis-phenols which can be used are bis(p-hydroxy) diphenyl, bis(p-hydroxyphenyl) methane, and bis(p-hydroxyphenyl) propane. Equivalent ester-forming derivatives of diols are also useful (e.g., ethylene oxide or ethylene carbonate can be used in place of ethylene glycol). The term "low molecular weight diols" as used herein should be construed to include such equivalent ester-forming derivates; provided however, that the molecular weight requirement pertains to the diol only and not to its derivatives.

Dicarboxylic acids (other than terephthalic acid) which are reacted with the foregoing long chain glycols and low molecular weight diols to produce the low C/O copolyesters useable in the blends of this invention are aliphatic, cycloaliphatic or aromatic dicarboxylic acids of a low molecular weight, i.e., having a molecular weight of less than 300. The term "dicarboxylic acids" as used herein includes acid equivalents of dicarboxylic acids having two functional carboxyl groups which perform substantially like dicarboxylic acids in reaction with glycols and diols in forming copolyester polymers. These equivalents include esters and ester-forming derivatives, such as acid halides and anhydrides. The molecular weight requirement pertains to the acid and not to its equivalent ester or ester-forming derivative. Thus, an ester of dicarboxylic acid having a molecular weight greater than 300 or an acid equivalent of dicarboxylic acid having a molecular weight greater than 300 are included provided the acid has a molecular weight below 300. The dicarboxylic acids can contain any substituent groups or combinations which do not substantially interfere with the copolyester polymer formation and use of the polymer in the elastomeric compositions.

Aliphatic dicarboxylic acids, as the term is used herein, referes to carboxylic acids having two carboxyl groups each attached to a saturated carbon atom. If the carbon atom to which the carboxyl group is attached is saturated and is in a ring, the acid is cycloalipahtic. Aliphatic or cycloaliphatic acids having conjugated unsaturation often cannot be used because of homopolymerization. However, some unsaturated acids, such as maleic acid, can be used.

Aromatic dicarboxylic acids as used herein are dicarboxylic acids having two carboxyl groups attached to a carbon atom in an isolated or fused benzene ring. It is not necessary that both functional carboxyl groups be attached to the same aromatic ring and where more than one ring is present, they can be joined by aliphatic or aromatic divalent radicals or divalent radicals such as -O- or $-SO_3-$.

Representative aliphatic and cycloaliphatic acids which can be used include sebacic acid, 1,3-cyclohexane dicarboxylic acid, 1,4-cyclohexane dicarboxylic acid, adipic acid, glutaric acid, succinic acid, carbonic acid, oxalic acid, azelaic acid, diethyl-malonic acid, allylmalonic acid, 4-cyclohexene-1,2-dicarboxylic acid, 2-ethylsuberic acid, 2,2,3,3-tetramethylsuccinic acid, cyclopentanedicarboxylic acid, decahydro-1,5-naphthylene dicarboxylic acid, 4,4-bicyclohexyl dicarboxylic acid, decahydro-2,6-naphthylene dicarboxylic acid, 4,4-methylenebis-(cyclohexyl) carboxylic acid, 3,4-furan dicarboxylic acid, and 1,1-cyclobutane dicarboxylic acid. Preferred aliphatic acids are cyclohexane dicarboxylic acids and adipic acid.

Representative aromatic dicarboxylic acids which can be used include phthalic and isophthalic acids, bibenzoic acid, substituted dicarboxy compounds with two benzene nuclei such as bis(p-carboxyphenol) methane, p-oxy(p-carboxyphenyl) benzoic acid, ethylene-bis(p-oxybenzoic acid)1,5-napthalene dicarboxylic acid, 2,7-naphthalene dicarboxylic acid, phenanthralene dicarboxylic acid, anthralene dicarboxylic acid, 4,4'-sulfonyl dibenzoic acid and C1-C12 alkyl and ring substitution derivatives thereof, such as halo, alkoxy, and aryl derivatives. Hydroxyl acids, such as p(β-hydroxyethoxy) benzoic acid can also be used providing an aromatic dicarboxylic acid is also present.

Aromatic dicarboxylic acids are a preferred class for preparing the low C/O copolyester elastomers as above-described. Among the aromatic acids, those with 8-16 carbon atoms are preferred, particularly the phenylene dicarboxylic acids, i.e., phthalic and isophthalic acids.

The copolyesters useable in the compositions of this invention are prepared by polymerizing with each other (a) one or more dicarboxylic acids or their equivalents (and esters or ester-forming derivatives such as acid chlorides, anhydrides, etc.), (b) one or more linear long chain glycols, and (c) one or more low molecular weight diols. The polymerization reaction can be effected by conventional procedures, as for example, in bulk or in a solvent medium which dissolves one or more of the monomers.

B. The Polyester Base Resin Component

The polyester base resin with which the low C/O copolyester elastomer component as above-described may be blended are those copolyester elastomers generally as above described, except that the long chain ester unit thereof (i.e., Formula (a) above) is derived from a corresponding long chain glycol having a molecular weight of between 600-6000, and a carbon to oxygen ratio of greater than 2.5, as described more fully in U.S. Patent No. 3,651,014. Such copolyester elastomers will hereinafter be referred to as "high C/O copolyester elastomers", it being understood that they principally differ from the above-discussed low C/O copolyester elastomers (which are essential in the blends of this invention) by the carbon to oxygen ratio of the long chain glycols from which each is prepared.

In this regard, the long chain glycols which can be used in preparing the high C/O copolyester elastomers include poly(alkylene oxide) glycols (wherein the alkylene consituent is C3-C8) such as poly(1,2- and 1,3-propylene oxide) glycol, poly(tetramethylene oxide) glycol, poly((pentamethylene oxide) glycol, poly(hexamethylene oxide) glycol, poly (heptamethylene oxide) glycol, poly(octamethylene oxide) glycol, poly(nonamethylene oxide) glycol and poly(1,2-butylene oxide) glycol (used in proportions such that the carbon to oxygen mole ratio in the glycol exceeds 2.5) and polyformals prepared by reacting formaldehyde with glycols, such as pentamethylene glycol, or mixtures of glycols, such as a mixture of tetramethylene and pentamethylene glycols.

In addition, the dicarboxymethyl acids of poly(alkylene oxides) such as the one derived from polytetramethylene oxide

$$HOOCCH_2(OCH_2CH_2CH_2CH_2)_xOCH_2COOH$$

can be used to form long chain glycols in situ. Polythioether glycols and polyester glycols also provide useful products. In using polyester glycols care must generally be exercised to control a tendency to interchange during melt polymerization, but certain sterically hindered polyesters, e.g., poly(2,2-dimethyl-1,3-propylene adipate), poly(2,2-dimethyl-1,3-propylene/2-methyl-2,2-ethyl-1,3-propylene 2,5-dimethylterephthalate), poly(2,2-dimethyl-1,3-propylene/2,2-diethyl-1,3-propylene, 1,4-cyclohexanedicarboxylate) and poly(1,2-cyclohexylenedimethylene/2,2dimethyl-1,3-propylene 1,4-cyclohexanedicarboxylate) can be utilized under normal reaction conditions and other more reactive polyester glycols can be used if a short residence time is employed. Either polybutadiene or polyisoprene glycols, copolymers of these and saturated hydrogenation products of these materials are also satisfactory long chain polymeric glycols. In addition, the glycol esters of dicarboxylic acids formed by oxidation of polyisobutylene diene copolymers are useful raw materials.

Generally, the polyester base resin will be present in the blends of this invention in an amount of from 5 to 95 percent by weight, typically in an amount greater than 20 percent by weight, preferably in an amount of from 25 to 95 percent by weight, and most preferably in an amount of from 30 to 75 percent by weight. The low C/O copolyester elastomer, on the other hand, will generally be present in the blends of this invention in an amount of from 5 percent to 95 percent by weight, typically in an amount of less than 80 percent by weight, preferably in an amount of from 5 to 75 percent by weight, and most preferably in an amount of from 25 percent to 70 percent by weight of the blend.

C. Modifiers

A variety of modifiers may also be blended with the polyester base resin and low C/O copolyester elastomer as above-described to achieve a desired amount of property modification. Preferred for the compositions of the present invention are the core-shell graft copolymers described in greater detail in U.S. Patent 3,864,428. Generally, these preferred modifiers are butadiene-type core-shell graft copolymers formed between a butadiene polymer core whose

butadiene units account for at least 50 mole % of the total polymer and at least one crosslinked vinyl monomer such as a derivative of acrylic or methacrylic acid. In preferred embodiments more than one vinyl monomer is grafted to the butadiene rubber, for example a preferred copolymer is a three-stage polymer having a butadiene based rubbery core, a second-stage polymerized from styrene, and a final stage (or shell) polymerized from methylmethacrylate and 1,3-butylene glycol dimethacrylate. Particular butadiene type core-shell modifiers which may be employed in the compositions of this invention include those commercially available from Rohm and Haas Company under the trade name Paraloid KM-653; from M & T Chemicals under the designation Metablen C-223; and/or from Kaneka Texas Corp. under the designation Kane-Ace B-56.

Another class of modifiers useful in the compositions of this invention are so-called acrylic modifiers (i.e., multiphase polymers). These multiphase polymers typically include from 25 to 95 weight percent of a first elastomeric phase and 75 to 5 weight percent of a final rigid thermoplastic phase. One or more intermediate phases are optional, for example a middle stage polymerized from 75 to 100 percent by weight styrene. The first stage is polymerized from to 99.8 weight percent $C_1$ and $C_6$ acrylate resulting in an acrylic rubber core having a glass transition temperature below 10°C and crosslinked with 0.1 to 5 weight percent crosslinking monomer and further containing 0.1 to 5 percent by weight graftlinking monomer.

The cross linking monomer is a polyethylenically unsaturated monomer having a plurality of addition polymerizable reactive groups all of which polymerize at substantially the same rate of reaction. Suitable crosslinking monomers include polyacrylic and polymethacrylic esters of polyols usch as butylene diacrylate and dimethacrylate, trimethylol propane trimethacrylate, and the like; di- and trivinyl benzene, vinyl acrylate and methacrylate, and the like. The preferred crosslinking monomer is butylene diacrylate. The graftlinking monomer is polyethylenically unsaturated monomer having a plurality of addition polymerizable reactive groups, at least one of which polymerizing at a substantially different rate of polymerization from at least one other of said reactive groups.

The function of the graftlinking monomer is to provide a residual level of unsaturation in the elastomeric phase, particularly in the latter stages of polymerization and, consequently, at or near the surface of the elastomer particles. When the rigid thermoplastic phase is subsequently polymerized at the surface of the elastomer, the residual unsaturated addition polymerizable reactive group contributed by the graftlinking monomer participates in the subsequent reaction so that at least a portion of the rigid phase is chemically attached to surface of the elastomer.

Among the effective graftlinking monomers are allyl group-containing monomers of allyl esters of ethylenically unsaturated acids such as allyl acrylate, allyl methacrylate, diallyl maleate, diallyl fumarate, diallyl itaconate, allyl acid maleate, allyl acid fumarate, and allyl acid itaconate. Somewhat less preferred are the diallyl esters of polycarboxylic acids which do not contain polymerizable unsaturation. The preferred graftlinking monomers are allyl methacrylate and diallyl maleate. A most preferred interpolymer has oily two stages, the first stage comprising 60 to 95 percent by weight of the interpolymer and being polymerized from a monomer system comprising 95 to 99.8 percent by weight butyl acrylate 0.1 to 2.5 percent by weight butylene diacrylate as crosslinking agent, 0.1 to 2.5 percent by weight allyl methacrylate or diallyl maleate as a graftlinking agent, with a final stage polymerized fom 60 to 100 percent by weight methyl methacrylate.

The final state monomer system can be comprised of $C_1$ to $C_{16}$ methacrylate, styrene, acrylonitride, alkyl acrylates, allyl methacrylate, diallyl methacrylate, and the like, as long as the overall glass transition temperature is at least about 20°C. Preferably the final stage monomer system is at least about 50 weight percent $C_1$ to $C_4$ alkyl methacrylate. It is further preferred that the final stage polymer be free of units which tend to degrade poly(alkylene terephthalates), for example acid, hydroxyl, amino, and amide groups.

For further descriptions and examples of various multiphase polymers suitable for use in the present invention, references may be had to U.S. Pat. Nos. 4,096,202 and 4,034,013.

**D. Other Additives**

A varied of optional additives conventionally employed in engineering resin formulations may be incorporated into the blends according to this invention. These additives include fillers (e.g., calcium silicate, silica, clays, talc, mica, polytetrafluoroethylene, graphite, alumina trihydrate, sodium aluminum carbonate, barium ferrite, and the like), colorants, reinforcing agents (e.g., glass fibers, graphitic carbon fibers, amorphous carbon fibers, synthetic polymeric fibers, aluminum fibers, titanium fibers, steel fibers, tungsten fibers, ceramic fibers, and the like), stabilizers (such as known polyester ultraviolet light absorbers, antioxidants, etcetera), flame retardants, and the like. Suffice it to say, that one or more of these optional additives may be employed in amounts effective to serve their intended purpose in the blends of this invention in dependence upon the particular end-use application and environment in which the blend is employed.

The present invention will be further illustrated by way of the following Examples.

## EXAMPLES

The low C/O copolyester elastomers used in the following example were prepared by reacting dimethylterephthalate (DMT), butanediol (B1D), and poly(ethylene oxide) glycol (PEG), and a catalyst in the amounts presented in the following Table 1. All reactants, an amine stablizer, and a catalyst were charged at the beginning of the reaction process and an inert sweep gas was maintained throughout the ester interchange process until evolution of methanol was complete. Polycondensation occured at 250°C and high vacuum (<1mm Hg <133 Pa). The termination of the reaction was determined by agitator torque which is correlated with molecular weight.

Table 1

| Reactant | Elastomer A | Elastomer B |
|---|---|---|
| DMT | 52 g. | 55 g. |
| B1D | 36 g. | 39 g. |
| PEG | 42 g. | 38 g. |
| Stabilizer* | <5 g. | <5 g. |
| Catalyst** | <2 g. | <2 g. |
| MFR*** | 20 | 20 |

Notes:
* alpha,alpha-dimethyl-benzyldiphenylamine
** tetraisopropyltitanate
*** MFR = Melt Flow Rate in g/10 min; ASTM D-1238, 220°C and 2160 grams (weight on plunger)

Water absorption data in the following Example were obtained following the procedures of ASTM D-570. The predicted water absorption (PWA) was determined from the following equation:

$$PWA = [(WA_{pe}) \times (WtF_{pe})] + [(WA_{cope}) \times (WtF_{cope})]$$

where:

| | |
|---|---|
| PWA | is the predicted percent water absorption of the blend; |
| $WA_{pe}$ | is the percent water absorption of the polyester base resin; |
| $WtF_{pe}$ | is the weight fraction of the polyester base resin; |
| $WA_{cope}$ | is the percent water absorption of the low C/O copolyester elastomer component; and |
| $WtF_{cope}$ | is the weight fraction of the low C/O copolyester elastomer component. |

The blend samples noted below were prepared on a 28 mm twin-screw extruder. The copolyester elastomer components (both the low and high C/O copolyester elastomer components) were dried for four hours at 225°F (107°C) prior to compounding.

For each sample, the ingredients were tumble blended and then fed to the twin-screw extruder. The blend was extruded at 480°F (249°C) at a screw speed of 200 RPM. After compounding, the resulting blend was dried for four hours at 225°F (107°C), and then injection molded to produce test specimens. The water absorption values were determined on four inch (102 mm) diameter molded discs that were cut in half.

### Example I

Following the procedures discussed above, the samples identified in Table I below were prepared and tested for water absorption. All components in the blend are expressed in terms of weight percentages based upon the total weight of the blend.

TABLE I

| | CONTROL A | CONTROL B | SAMPLE 1 |
|---|---|---|---|
| Elastomer B[2] | 100 | | 70 |

NOTES:
1 Low C/O copolyester elastomer, 47D Hardness
2 Low C/O copolyester elastomer, 55D Hardness

TABLE I (continued)

| | CONTROL A | CONTROL B | SAMPLE 1 |
|---|---|---|---|
| Elastomer C[3] | | 100 | 30 |
| Measured Water Absorption, % | 15.00 | 0.10 | 7.5 |
| Predicted Water Absorption, % | | | 10.53 |

[3] High C/O copolyester elastomer (Riteflex ®555ZS, Hoechst Celanese Corporation)

The data in Table I above demonstrate that a lower than expected water absorption occurs when a blend of a high C/O copolyester elastomer and a low C/O copolyester elastomer is employed.

**Claims**

**Claims for the following Contracting States : AT, BE, CH, DE, DK, FR, GB, GR, IT, LI, LU, NL, SE**

1. A polyester resin composition which comprises (1) a polyester base resin that is a first copolyester elastomer consisting essentially of a multiplicity of recurring intralinear long chain and short chain ester units connected head-to-tail through ester linkages, wherein said long chain ester units are represented by the structural formula:

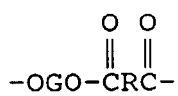 (a1)

and the short chain ester linkages are represented by the structural formula:

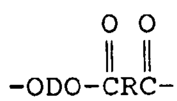 (b)

wherein:

G is a divalent radical remaining after removal of terminal hydroxy groups from a poly(alkylene oxide) glycol having a molecular weight of 600 to 6000 and a carbon to oxygen ratio greater than 2.5;
D is a divalent radical remaining after removal of hydroxyl groups from a low molecular weight diol having a molecular weight of less than 250; and
R is a divalent radical remaining after removal of carboxyl groups from a dicarboxylic acid having a molecular weight of less than 300;

and (2) a second copolyester elastomer consisting essentially of a multiplicity of recurring intralinear long chain and short chain ester units connected head-to-tail through ester linkages, wherein said long chain ester units are represented by the structural formula:

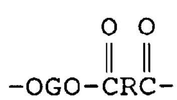 (a2)

and the short chain ester linkages are represented by the structural formula:

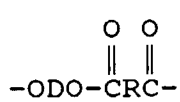 (b)

wherein:

G is a divalent radical remaining after removal of terminal hydroxy groups from a poly(alkylene oxide) glycol having a molecular weight of 400-3500 and a carbon to oxygen ratio of 2.0 to 2.4;
D is a divalent radical remaining after removal of hydroxyl groups from a low molecular weight diol having a molecular weight of less than 250; and
R is a divalent radical remaining after removal of carboxyl groups from a dicarboxylic acid having a molecular weight of less than 300.

**2.** A polyester composition as claimed in claim 1, wherein said short chain ester units of formula (b) constitute 25-65 percent by weight of said first copolyester elastomer.

**3.** A polyester composition as claimed in claim 1 or 2, wherein at least 70 percent by weight of the R groups in said first copolyester elastomer are 1,4-phenylene radicals.

**4.** A polyester composition as claimed in claim 3, wherein at least 70 percent of the D groups in said first copolyester elastomer are 1,4-butylene radicals and the sum of the percentages of the R groups in said first copolyester elastomer which are not 1,4-phenylene radicals and of the D groups in said first copolyester elastomer which are not 1,4-butylene radicals does not exceed 30 percent.

**5.** A polyester composition as claimed in any of claims 1 to 4, wherein said short chain ester units of formula (b) in said second copolyester elastomer constitute 25-65 percent by weight of said second copolyester elastomer.

**6.** A polyester composition as claimed in any of claims 1 to 5, wherein at least 70 percent by weight of the R groups in said second copolyester elastomer are 1,4-phenylene radicals.

**7.** A polyester composition as claimed in claim 6, wherein at least 70 percent of the D groups in said second copolyester elastomer are 1,4-butylene radicals and the sum of the percentages of the R groups in said second copolyester elastomer which are not 1,4-phenylene radicals and of the D groups in said second copolyester elastomer which are not 1,4-butylene radicals does not exceed 30 percent.

**8.** A composition as claimed in any of claims 1 to 7, which further comprises a modifier.

**9.** A composition as claimed in claim 8, wherein said modifier is a butadiene polymer core-shell polymer formed between a butadiene polymer core whose butadiene units account for at least 50 mole percent of the total polymer and at least one crosslinked vinyl monomer selected from acrylic acid and methacrylic acid.

**10.** A composition as claimed in claim 8, wherein said modifier is a multiphase polymer including 25 to 95 weight percent of a first elastomeric phase and 75 to 5 weight percent of a second rigid thermoplastic phase.

**11.** A composition as claimed in any of claims 1 to 10, wherein the second copolyester elastomer is present in an amount of from 5 to 95 percent by weight of the blend of polyester base resin and the second copolyester elastomer.

**12.** A composition as claimed in any of claims 1 to 10, wherein the polyester base resin is present in an amount of from 25 to 95 percent by weight of the blend of polyester base resin and the second copolyester elastomer.

**13.** A composition as claimed in any of claims 1 to 10, wherein the second copolyester elastomer is present in an amount of from 25 to 70 percent by weight of the blend of polyester base resin and the second copolyester elastomer.

**14.** A process for the production of a polyester resin composition of substantially reduced water absorbency which comprises forming a blend of a polyester base resin and a copolyester elastomer as defined in any of claims 1-13.

**Claims for the following Contracting State : ES**

**1.** A process for the production of a polyester resin composition which comprises forming a blend of (1) a polyester base resin that is a first copolyester elastomer consisting essentially of a multiplicity of recurring intralinear long

chain and short chain ester units connected head-to-tail through ester linkages, wherein said long chain ester units are represented by the structural formula:

$$-OGO-\overset{\overset{O}{||}}{C}R\overset{\overset{O}{||}}{C}- \qquad (a1)$$

and the short chain ester linkages are represented by the structural formula:

$$-ODO-\overset{\overset{O}{||}}{C}R\overset{\overset{O}{||}}{C}- \qquad (b)$$

wherein:

G is a divalent radical remaining after removal of terminal hydroxy groups from a poly(alkylene oxide) glycol having a molecular weight of 600 to 6000 and a carbon to oxygen ratio greater than 2.5;
D is a divalent radical remaining after removal of hydroxyl groups from a low molecular weight diol having a molecular weight of less than 250; and
R is a divalent radical remaining after removal of carboxyl groups from a dicarboxylic acid having a molecular weight of less than 300;

and (2) a second copolyester elastomer consisting essentially of a multiplicity of recurring intralinear long chain and short chain ester units connected head-to-tail through ester linkages, wherein said long chain ester units are represented by the structural formula:

$$-OGO-\overset{\overset{O}{||}}{C}R\overset{\overset{O}{||}}{C}- \qquad (a2)$$

and the short chain ester linkages are represented by the structural formula:

$$-ODO-\overset{\overset{O}{||}}{C}R\overset{\overset{O}{||}}{C}- \qquad (b)$$

wherein:

G is a divalent radical remaining after removal of terminal hydroxy groups from a poly(alkylene oxide) glycol having a molecular weight of 400-3500 and a carbon to oxygen ratio of 2.0 to 2.4;
D is a divalent radical remaining after removal of hydroxyl groups from a low molecular weight diol having a molecular weight of less than 250; and
R is a divalent radical remaining after removal of carboxyl groups from a dicarboxylic acid having a molecular weight of less than 300.

**2.** A process as claimed in claim 1, wherein said short chain ester units of formula (b) constitute 25-65 percent by weight of said first copolyester elastomer.

**3.** A process as claimed in claim 1 or 2, wherein at least 70 percent by weight of the R groups in said first copolyester elastomer are 1,4-phenylene radicals.

**4.** A process as claimed in claim 3, wherein at least 70 percent of the D groups in said first copolyester elastomer are 1,4-butylene radicals and the sum of the percentages of the R groups in said first copolyester elastomer which are not 1,4-phenylene radicals and of the D groups in said first copolyester elastomer which are not 1,4-butylene

radicals does not exceed 30 percent.

5. A process as claimed in any of claims 1 to 4, wherein said short chain ester units of formula (b) in said second copolyester elastomer constitute 25-65 percent by weight of said second copolyester elastomer.

6. A process as claimed in any of claims 1 to 5, wherein at least 70 percent by weight of the R groups in said second copolyester elastomer are 1,4-phenylene radicals.

7. A process as claimed in claim 6, wherein at least 70 percent of the D groups in said second copolyester elastomer are 1,4-butylene radicals and the sum of the percentages of the R groups in said second copolyester elastomer which are not 1,4-phenylene radicals and of the D groups in said second copolyester elastomer which are not 1,4-butylene radicals does not exceed 30 percent.

8. A process as claimed in any of claims 1 to 7,in which a modifier is blended with the polyester base resin and the second copolyester elastomer.

9. A process as claimed in claim 8, wherein said modifier is a butadiene polymer core-shell polymer formed between a butadiene polymer core whose butadiene units account for at least 50 mole percent of the total polymer and at least one crosslinked vinyl monomer selected from acrylic acid and methacrylic acid.

10. A process as claimed in claim 8, wherein said modifier is a multiphase polymer including 25 to 95 weight percent of a first elastomeric phase and 75 to 5 weight percent of a second rigid thermoplastic phase.

11. A process as claimed in any of claims 1 to 10, wherein the second copolyester elastomer is present in an amount of from 5 to 95 percent by weight of the blend of polyester base resin and the second copolyester elastomer.

12. A process as claimed in any of claims 1 to 10, wherein the polyester base resin is present in an amount of from 25 to 95 percent by weight of the blend of polyester base resin and the second copolyester elastomer.

13. A process as claimed in any of claims 1 to 10, wherein the second copolyester elastomer is present in an amount of from 25 to 70 percent by weight of the blend of polyester base resin and the second copolyester elastomer.

**Patentansprüche**

**Patentansprüche für folgende Vertragsstaaten : AT, BE, CH, DE, DK, FR, GB, GR, IT, LI, LU, NL, SE**

1. Polyesterharz-Zusammensetzung, umfassend (1) ein Polyester-Grundharz, das ein erstes Copolyester-Elastomer ist, bestehend im wesentlichen aus einer Vielzahl von intralinearen langkettigen und kurzkettigen Ester-Repetiereinheiten, die über Esterbindungen Kopf-Schwanz-verbunden sind, wobei die langkettigen Estereinheiten durch die Strukturformel:

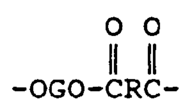
(a1)

dargestellt werden und die kurzkettigen Esterbindungen durch die Strukturformel:

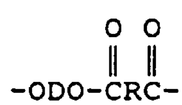
(b)

dargestellt werden,

wobei:

G ein zweiwertiger Rest ist, der nach dem Entfernen von terminalen Hydroxygruppen von einem Poly(alkylenoxid)glycol mit einer Molmasse von 600 bis 6000 und einem Verhältnis von Kohlenstoff zu Sauerstoff von mehr als 2,5 verbleibt;

D ein zweiwertiger Rest ist, der nach dem Entfernen von Hydroxylgruppen von einem Diol mit einer niedrigen Molmasse mit einer Molmasse von weniger als 250 verbleibt; und

R ein zweiwertiger Rest ist, der nach dem Entfernen von Carboxylgruppen von einer Dicarbonsäure mit einer Molmasse von weniger als 300 verbleibt; und

(2) ein zweites Copolyester-Elastomer, das im wesentlichen aus einer Vielzahl von intralinearen langkettigen und kurzkettigen Ester-Repetiereinheiten, die durch Esterbindungen Kopf-Schwanz-verbunden sind, besteht, wobei die langkettigen Estereinheiten durch die Strukturformel:

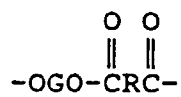 (a2)

dargestellt werden und die kurzkettigen Esterbindungen durch die Strukturformel:

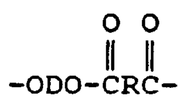 (b)

dargestellt werden,
wobei:

G ein zweiwertiger Rest ist, der nach dem Entfernen von terminalen Hydroxygruppen von einem Poly(alkylenoxid)glycol mit einer Molmasse von 400 - 3500 und einem Verhältnis von Kohlenstoff zu Sauerstoff von 2,0 bis 2,4 verbleibt;

D ein zweiwertiger Rest ist, der nach dem Entfernen von Hydroxylgruppen von einem Diol mit einer niedrigen Molmasse mit einer Molmasse von weniger als 250 verbleibt; und

R ein zweiwertiger Rest ist, der nach dem Entfernen von Carboxylgruppen von einer Dicarbonsäure mit einer Molmasse von weniger als 300 verbleibt.

**2.** Polyester-Zusammensetzung nach Anspruch 1, wobei die kurzkettigen Estereinheiten der Formel (b) 25 - 65 Gew.-% des ersten Copolyester-Elastomers darstellen.

**3.** Polyester-Zusammensetzung nach Anspruch 1 oder 2, wobei wenigstens 70 Gew.-% der R-Gruppen im ersten Copolyester-Elastomer 1,4-Phenylenreste sind.

**4.** Polyester-Zusammensetzung nach Anspruch 3, wobei wenigstens 70 % der D-Gruppen im ersten Copolyester-Elastomer 1,4-Butylenreste sind und die Summe der Prozentwerte der R-Gruppen im ersten Copolyester-Elastomer, bei denen es sich nicht um 1,4-Phenylenreste handelt, und der D-Gruppen im ersten Copolyester-Elastomer, bei denen es sich nicht um 1,4-Butylenreste handelt, nicht 30 % überschreitet.

**5.** Polyester-Zusammensetzung nach einem der Ansprüche 1 bis 4, wobei die kurzkettigen Estereinheiten der Formel (b) im zweiten Copolyester-Elastomer 25 - 65 Gew.-% des zweiten Copolyester-Elastomers darstellen.

**6.** Polyester-Zusammensetzung nach einem der Ansprüche 1 bis 5, wobei wenigstens 70 Gew.-% der R-Gruppen im zweiten Copolyester-Elastomer 1,4-Phenylenreste sind.

**7.** Polyester-Zusammensetzung nach Anspruch 6, wobei wenigstens 70 % der D-Gruppen im zweiten Copolyester-Elastomer 1,4-Butylenreste sind und die Summe der Prozentwerte der R-Gruppen im zweiten Copolyester-Elastomer, bei denen es sich nicht um 1,4-Phenylenreste handelt, und der D-Gruppen im zweiten Copolyester-Elastomer, bei denen es sich nicht um 1,4-Butylenreste handelt, nicht 30 % überschreitet.

**8.** Zusammensetzung nach einem der Ansprüche 1 bis 7, weiterhin umfassend einen Regler.

**9.** Zusammensetzung nach Anspruch 8, wobei der Regler ein Butadienpolymer-Kern-Schale-Polymer ist, das aus einem Butadienpolymer-Kern, dessen Butadieneinheiten wenigstens 50 mol-% des gesamten Polymers ausmachen, und wenigstens einem vernetzten Vinylmonomer, ausgewählt aus Acrylsäure und Methacrylsäure, gebildet ist.

**10.** Zusammensetzung nach Anspruch 8, wobei der Regler ein Mehrphasen-Polymer ist, das 25 bis 95 Gew.-% einer ersten elastomeren Phase und 75 bis 5 Gew.-% einer zweiten, starren, thermoplastischen Phase umfaßt.

**11.** Zusammensetzung nach einem der Ansprüche 1 bis 10, wobei das zweite Copolyester-Elastomer in einer Menge von 5 bis 95 Gew.-% der Mischung aus dem Polyester-Grundharz und dem zweiten Copolyester-Elastomer vorhanden ist.

**12.** Zusammensetzung nach einem der Ansprüche 1 bis 10, wobei das Polyester-Grundharz in einer Menge von 25 bis 95 Gew.-% der Mischung aus dem Polyester-Grundharz und dem zweiten Copolyester-Elastomer vorhanden ist.

**13.** Zusammensetzung nach einem der Ansprüche 1 bis 10, wobei das zweite Copolyester-Elastomer in einer Menge von 25 bis 70 Gew.-% der Mischung aus dem Polyester-Grundharz und dem zweiten Copolyester-Elastomer vorhanden ist.

**14.** Verfahren zur Herstellung einer Polyesterharz-Zusammensetzung mit einem wesentlich verminderten Absorptionsvermögen für Wasser, umfassend das Bilden einer Mischung aus einem Polyester-Grundharz und einem Copolyester-Elastomer, definiert in einem der Ansprüche 1 - 13.

**Patentansprüche für folgenden Vertragsstaat : ES**

**1.** Verfahren zur Herstellung einer Polyesterharz-Zusammensetzung, umfassend das Bilden einer Mischung aus (1) einem Polyester-Grundharz, das ein erstes Copolyester-Elastomer ist, bestehend im wesentlichen aus einer Vielzahl von intralinearen langkettigen und kurzkettigen Ester-Repetiereinheiten, die über Esterbindungen Kopf-Schwanz-verbunden sind, wobei die langkettigen Estereinheiten durch die Strukturformel:

$$-OGO-\overset{\overset{O}{\|}}{C}R\overset{\overset{O}{\|}}{C}- \qquad (a1)$$

dargestellt werden und die kurzkettigen Esterbindungen durch die Strukturformel:

$$-ODO-\overset{\overset{O}{\|}}{C}R\overset{\overset{O}{\|}}{C}- \qquad (b)$$

dargestellt werden,
wobei:

G ein zweiwertiger Rest ist, der nach dem Entfernen von terminalen Hydroxygruppen von einem Poly(alkylenoxid)glycol mit einer Molmasse von 600 bis 6000 und einem Verhältnis von Kohlenstoff zu Sauerstoff von mehr als 2,5 verbleibt;

D ein zweiwertiger Rest ist, der nach dem Entfernen von Hydroxylgruppen von einem Diol mit einer niedrigen Molmasse mit einer Molmasse von weniger als 250 verbleibt; und

R ein zweiwertiger Rest ist, der nach dem Entfernen von Carboxylgruppen von einer Dicarbonsäure mit einer Molmasse von weniger als 300 verbleibt; und

(2) einem zweiten Copolyester-Elastomer, das im wesentlichen aus einer Vielzahl von intralinearen langkettigen und kurzkettigen Ester-Repetiereinheiten, die durch Esterbindungen Kopf-Schwanz-verbunden sind, besteht, wobei die langkettigen Estereinheiten durch die Strukturformel:

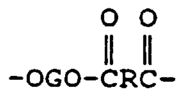 (a2)

dargestellt werden und die kurzkettigen Esterbindungen durch die Strukturformel:

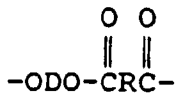 (b)

dargestellt werden,
wobei:

G ein zweiwertiger Rest ist, der nach dem Entfernen von terminalen Hydroxygruppen von einem Poly(alkylenoxid)glycol mit einer Molmasse von 400 - 3500 und einem Verhältnis von Kohlenstoff zu Sauerstoff von 2,0 bis 2,4 verbleibt;

D ein zweiwertiger Rest ist, der nach dem Entfernen von Hydroxylgruppen von einem Diol mit einer niedrigen Molmasse mit einer Molmasse von weniger als 250 verbleibt; und

R ein zweiwertiger Rest ist, der nach dem Entfernen von Carboxylgruppen von einer Dicarbonsäure mit einer Molmasse von weniger als 300 verbleibt.

**2.** Verfahren nach Anspruch 1, wobei die kurzkettigen Estereinheiten der Formel (b) 25 - 65 Gew.-% des ersten Copolyester-Elastomers darstellen.

**3.** Verfahren nach Anspruch 1 oder 2, wobei wenigstens 70 Gew.-% der R-Gruppen im ersten Copolyester-Elastomer 1,4-Phenylenreste sind.

**4.** Verfahren nach Anspruch 3, wobei wenigstens 70 % der D-Gruppen im ersten Copolyester-Elastomer 1,4-Butylenreste sind und die Summe der Prozentwerte der R-Gruppen im ersten Copolyester-Elastomer, bei denen es sich nicht um 1,4-Phenylenreste handelt, und der D-Gruppen im ersten Copolyester-Elastomer, bei denen es sich nicht um 1,4-Butylenreste handelt, nicht 30 % überschreitet.

**5.** Verfahren nach einem der Ansprüche 1 bis 4, wobei die kurzkettigen Estereinheiten der Formel (b) im zweiten Copolyester-Elastomer 25 - 65 Gew.-% des zweiten Copolyester-Elastomers darstellen.

**6.** Verfahren nach einem der Ansprüche 1 bis 5, wobei wenigstens 70 Gew.-% der R-Gruppen im zweiten Copolyester-Elastomer 1,4-Phenylenreste sind.

**7.** Verfahren nach Anspruch 6, wobei wenigstens 70 % der D-Gruppen im zweiten Copolyester-Elastomer 1,4-Butylenreste sind und die Summe der Prozentwerte der R-Gruppen im zweiten Copolyester-Elastomer, bei denen es sich nicht um 1,4-Phenylenreste handelt, und der D-Gruppen im zweiten Copolyester-Elastomer, bei denen es sich nicht um 1,4-Butylenreste handelt, nicht 30 % überschreitet.

**8.** Verfahren nach einem der Ansprüche 1 bis 7, wobei ein Regler mit dem Polyester-Grundharz und dem zweiten Copolyester-Elastomer vermischt wird.

**9.** Verfahren nach Anspruch 8, wobei der Regler ein Butadienpolymer-Kern-Schale-Polymer ist, das aus einem Butadienpolymer-Kern, dessen Butadieneinheiten wenigstens 50-mol-% des gesamten Polymers ausmachen, und wenigstens einem vernetzten Vinylmonomer, ausgewählt aus Acrylsäure und Methacrylsäure, gebildet ist.

**10.** Verfahren nach Anspruch 8, wobei der Regler ein Mehrphasen-Polymer ist, das 25 bis 95 Gew.-% einer ersten elastomeren Phase und 75 bis 5 Gew.-% einer zweiten, starren, thermoplastischen Phase umfaßt.

**11.** Verfahren nach einem der Ansprüche 1 bis 10, wobei das zweite Copolyester-Elastomer in einer Menge von 5 bis 95 Gew.-% der Mischung aus dem Polyester-Grundharz und dem zweiten Copolyester-Elastomer vorhanden ist.

**12.** Verfahren nach einem der Ansprüche 1 bis 10, wobei das Polyester-Grundharz in einer Menge von 25 bis 95 Gew.-% der Mischung aus dem Polyester-Grundharz und dem zweiten Copolyester-Elastomer vorhanden ist.

**13.** Verfahren nach einem der Ansprüche 1 bis 10, wobei das zweite Copolyester-Elastomer in einer Menge von 25 bis 70 Gew.-% der Mischung aus dem Polyester-Grundharz und dem zweiten Copolyester-Elastomer vorhanden ist.

## Revendications

### Revendications pour les Etats contractants suivants : AT, BE, CH, DE, DK, FR, GB, GR, IT, LI, LU, NL, SE

**1.** Composition de résine polyester, qui comprend (1) une résine à base de polyester qui est un premier élastomère copolyester consistant essentiellement en une multiplicité de motifs ester intralinéaires récurrents à chaîne longue et à chaîne courte reliés tête-à-queue par des liaisons ester, où les motifs ester à chaîne longue sont représentés par la formule structurale :

$$-OGO-\overset{\overset{O}{\|}}{C}R\overset{\overset{O}{\|}}{C}- \qquad (a1)$$

et les motifs ester à chaîne courte sont représentés par la formule structurale :

$$-ODO-\overset{\overset{O}{\|}}{C}R\overset{\overset{O}{\|}}{C}- \qquad (b)$$

formules dans lesquelles :

G est un radical divalent restant après enlèvement de groupes hydroxy terminaux d'un poly(oxyde d'alkylène)-glycol ayant un poids moléculaire de 600 à 6000 et un rapport du carbone à l'oxygène supérieur à 2,5 ;
D est un radical divalent restant après enlèvement de groupes hydroxyle d'un diol de bas poids moléculaire ayant un poids moléculaire inférieur à 250 ; et
R est un radical divalent restant après enlèvement des groupes carboxyle d'un acide dicarboxylique ayant un poids moléculaire inférieur à 300 ;

et (2) un second élastomère copolyester consistant essentiellement en une multiplicité de motifs ester intralinéaires récurrents à chaîne longue et à chaîne courte reliés tête-à-queue par des liaisons ester, où les motifs ester à chaîne longue sont représentés par la formule structurale :

```
    O  O
    ‖  ‖
-OGO-CRC-        a2)
```

et les liaisons ester à chaîne courte sont représentées par la formule structurale :

```
    O  O
    ‖  ‖
-ODO-CRC-        (b)
```

formules dans lesquelles :

G est un radical divalent restant après enlèvement de groupes hydroxy terminaux d'un poly(oxyde d'alkylène)-glycol ayant un poids moléculaire de 400 à 3500 et un rapport carbone:oxygène de 2,0 à 2,4 ;
D est un radical divalent restant après enlèvement de groupes hydroxyle d'un diol de bas poids moléculaire ayant un poids moléculaire inférieur à 250 ; et
R est un radical divalent restant après enlèvement des groupes carboxyle d'un acide dicarboxylique ayant un poids moléculaire inférieur à 300.

**2.** Composition à base de polyester suivant la revendication 1, dans laquelle les motifs ester à chaîne courte de formule (b) constituent 25 à 65 % en poids du premier élastomère copolyester en question.

**3.** Composition à base de polyester suivant la revendication 1 ou 2, dans laquelle au moins 70 % en poids des groupes R présents dans le premier élastomère copolyester sont des radicaux 1,4-phénylène.

**4.** Composition à base de polyester suivant la revendication 3, dans laquelle au moins 70% des groupes D présents dans le premier élastomère copolyester en question sont des radicaux 1,4-butylène et la somme des pourcentages des groupes R dans le premier élastomère copolyester en question qui ne sont pas des radicaux 1,4-phénylène et des groupes D dans le premier élastomère copolyester en question qui ne sont pas des radicaux 1,4-butylène ne dépasse pas 30 %.

**5.** Composition à base de polyester suivant l'une quelconque des revendications 1 à 4, dans laquelle les motifs ester à chaîne courte de formule (b) dans le second élastomère copolyester constituent 25 à 65 % en poids de ce second élastomère copolyester.

**6.** Composition à base de polyester suivant l'une quelconque des revendications 1 à 5, dans laquelle au moins 70 % en poids des groupes R dans le second élastomère copolyester en question sont des radicaux 1,4-phénylène.

**7.** Composition à base de polyester suivant la revendication 6, dans laquelle au moins 70 % des groupes D dans le second élastomère copolyester en question sont des radicaux 1,4-butylène et la somme des pourcentages des groupes R dans ce second élastomère copolyester qui ne sont pas des radicaux 1,4-phénylène et des groupes D dans ce second élastomère copolyester qui ne sont pas les radicaux 1,4-butylène ne dépasse pas 30 %.

**8.** Composition suivant l'une quelconque des revendications 1 à 7, qui comprend en outre un agent modificateur.

**9.** Composition suivant la revendication 8, dans laquelle l'agent modificateur en question est un polymère à enveloppe et noyau de polymère de butadiène qui est formé entre un noyau de polymère de butadiène dont les motifs butadiène constituent au moins 50 moles % du polymère total et au moins un monomère vinylique réticulé choisi entre l'acide acrylique et l'acide méthacrylique.

**10.** Composition suivant la revendication 8, dans laquelle l'agent modificateur est un polymère à plusieurs phases comprenant 25 à 95 % en poids d'une première phase élastomérique et 75 à 5 % en poids d'une seconde phase thermoplastique rigide.

**11.** Composition suivant l'une quelconque des revendications 1 à 10, dans laquelle le second élastomère copolyester

est présent en une quantité de 5 à 95 % en poids du mélange de résine à base de polyester et du second élastomère copolyester.

12. Composition suivant l'une quelconque des revendications 1 à 10, dans laquelle la résine à base de polyester est présente en une proportion de 25 à 95 % en poids du mélange de résine à base de polyester et du second élastomère copolyester.

13. Composition suivant l'une quelconque des revendications 1 à 10, dans laquelle le second élastomère copolyester est présent en une proportion de 25 à 70 % en poids du mélange de résine à base de polyester et du second élastomère copolyester.

14. Procédé de production d'une composition à base de résine polyester de pouvoir d'absorption d'eau sensiblement réduit, qui comprend la formation d'un mélange d'une résine à base de polyester et d'un élastomère copolyester tel que défini dans l'une quelconque des revendications 1 à 13.

**Revendications pour l'Etat contractant suivant : ES**

1. Procédé de production d'une composition à base de résine polyester, qui comprend la formation d'un mélange (1) d'une résine à base de polyester qui est un premier élastomère copolyester consistant essentiellement en une multiplicité de motifs ester intralinéaires récurrents à chaîne longue et à chaîne courte reliés tête-à-queue par des liaisons ester, dans lequel les motifs ester à chaîne longue sont représentés par la formule structurale :

$$-OGO-\overset{\overset{O}{\|}}{C}R\overset{\overset{O}{\|}}{C}- \qquad (a1)$$

et les liaisons ester à chaîne courte sont représentées par la formule structurale :

$$-ODO-\overset{\overset{O}{\|}}{C}R\overset{\overset{O}{\|}}{C}- \qquad (b)$$

formules dans lesquelles :

G est un radical divalent restant après enlèvement de groupes hydroxy terminaux d'un poly(oxyde d'alkylène)-glycol ayant un poids moléculaire de 600 à 6000 et un rapport carbone:oxygène supérieur à 2,5 ;
D est un radical divalent restant après enlèvement des groupes hydroxyle d'un diol de bas poids moléculaire ayant un poids moléculaire inférieur à 250 ; et
R est un radical divalent restant après enlèvement des groupes carboxyle d'un acide dicarboxylique ayant un poids moléculaire inférieur à 300 ;

et (2) d'un second élastomère copolyester consistant essentiellement en une multiplicité de motifs ester intralinéaires récurrents à chaîne longue et à chaîne courte reliés tête-à-queue par des liaisons ester, où les motifs ester à chaîne longue sont représentés par la formule structurale :

$$-OGO-\overset{\overset{O}{\|}}{C}R\overset{\overset{O}{\|}}{C}- \qquad (a2)$$

et les liaisons ester à chaîne courte sont représentées par la formule structurale :

$$-ODO-\overset{\overset{O}{\|}}{C}R\overset{\overset{O}{\|}}{C}- \qquad (b)$$

formules dans lesquelles :

G est un radical divalent restant après enlèvement de groupes hydroxy terminaux d'un poly(oxyde d'alkylène)-glycol ayant un poids moléculaire de 400 à 3500 et un rapport carbone:oxygène de 2,0 à 2,4 ;
D est un radical divalent restant après enlèvement des groupes hydroxyle d'un diol de bas poids moléculaire ayant un poids moléculaire inférieur à 250 ; et
R est un radical divalent restant après enlèvement des groupes carboxyle d'un acide dicarboxylique ayant un poids moléculaire inférieur à 300.

**2.** Procédé suivant la revendication 1, dans lequel les motifs ester à chaîne courte de formule (b) constituent 25 à 65 % en poids du premier élastomère copolyester.

**3.** Procédé suivant la revendication 1 ou 2, dans lequel au moins 70 % en poids des groupes R dans le premier élastomère copolyester sont des radicaux 1,4-phénylène.

**4.** Procédé suivant la revendication 3, dans lequel au moins 70 % des groupes D dans le premier élastomère copolyester en question sont des radicaux 1,4-butylène et la somme des pourcentages des groupes R dans le premier élastomère copolyester en question qui ne sont pas des radicaux 1,4-phénylène et des groupes D dans le premier élastomère copolyester en question qui ne sont pas des radicaux 1,4-butylène ne dépasse pas 30 %.

**5.** Procédé suivant l'une quelconque des revendications 1 à 4, dans lequel les motifs ester à chaîne courte de formule (b) dans le second élastomère copolyester constituent 25 à 65 % en poids de ce second élastomère copolyester.

**6.** Procédé suivant l'une quelconque des revendications 1 à 5, dans lequel au moins 70 % en poids des groupes R dans le second élastomère copolyester en question sont des radicaux 1,4-phénylène.

**7.** Procédé suivant la revendication 6, dans lequel au moins 70 % des groupes D dans le second élastomère copolyester en question sont des radicaux 1,4-butylène et la somme des pourcentages des groupes R dans ce second élastomère copolyester qui ne sont pas des radicaux 1,4-phénylène et des groupes D dans ce second élastomère copolyester qui ne sont pas des radicaux 1,4-butylène ne dépasse pas 30 %.

**8.** Procédé suivant l'une quelconque des revendications 1 à 7, dans lequel un agent modificateur est mélangé avec la résine à base de polyester et le second élastomère copolyester.

**9.** Procédé suivant la revendication 8, dans lequel l'agent modificateur est un polymère à enveloppe et noyau de polymère de butadiène formé entre un noyau de polymère de butadiène dont les motifs butadiène constituent au moins 50 moles % du polymère total et au moins un monomère vinylique réticulé choisi entre l'acide acrylique et l'acide méthacrylique.

**10.** Procédé suivant la revendication 8, dans lequel l'agent modificateur est un polymère à plusieurs phases comprenant 25 à 95 % en poids d'une première phase élastomérique et 75 à 5 % en poids d'une seconde phase thermoplastique rigide.

**11.** Procédé suivant l'une quelconque des revendications 1 à 10, dans laquelle le second élastomère copolyester est présent en une quantité de 5 à 95 % en poids du mélange de résine à base de polyester et du second élastomère copolyester.

**12.** Procédé suivant l'une quelconque des revendications 1 à 10, dans lequel la résine à base de polyester est présente en une quantité de 25 à 95 % en poids du mélange de résine à base de polyester et du second élastomère copolyester.

**13.** Procédé suivant l'une quelconque des revendications 1 à 10, dans lequel le second élastomère copolyester est

présent en une quantité de 25 à 70 % en poids du mélange de résine à base de polyester et du second élastomère copolyester.